# EUROPÄISCHE PATENTSCHRIFT

(11) **EP 3 853 000 B1**
(45) Veröffentlichungstag und Bekanntmachung des Hinweises auf die Patenterteilung: **09.11.2022**
(21) Anmeldenummer: 19769428.4
(22) Anmeldetag: 11.09.2019
(51) Int. Cl.: B29C 48/255, B29C 48/25, B29C 48/92, F16K 11/085, F16K 11/10, B29C 64/209, B33Y 30/00

(54) **REGEL- UND VERSCHLUSSEINRICHTUNG FÜR EXTRUDIERTEN PLASTISCH VERFORMBAREN WERKSTOFF**
CONTROL AND CLOSURE DEVICE FOR EXTRUDED PLASTICALLY DEFORMABLE MATERIAL
DISPOSITIF DE RÉGLAGE ET DE FERMETURE POUR MATÉRIAU À DÉFORMATION PLASTIQUE EXTRUDÉ

(30) Priorität: 21.09.2018 DE 102018216152
(43) Veröffentlichungstag der Anmeldung: 28.07.2021
(73) Patentinhaber: Fraunhofer-Gesellschaft zur Förderung der angewandten Forschung e.V., 80686 München (DE)
(72) Erfinder: KAUSCH, Martin, 09126 Chemnitz (DE); BLASE, Johannes, 09126 Chemnitz (DE); UHLMANN, Stefan, 09126 Chemnitz (DE); JOHN, Christopher, 09126 Chemnitz (DE); SAUERSTEIN, Tobias, 09126 Chemnitz (DE)
(74) Vertreter: Pfenning, Meinig & Partner mbB
(86) Internationale Anmeldenummer: PCT/EP2019/074245
(87) Internationale Veröffentlichungsnummer: WO 2020/058065

(56) Entgegenhaltungen:
- CN-A- 101 235 914
- DE-C1- 3 815 897
- DE-C1- 10 204 244
- DE-U1- 8 712 896

## Beschreibung

Die Erfindung betrifft eine Regel- und Verschlusseinrichtung für extrudierten plastisch verformbaren Werkstoff, mit der eine Volumenstromregelung bei extrusionsbasierten Prozessen und auch ein Förderstopp möglich sind.

Nach heutigem Stand der Technik folgen extrusionsbasierte Prozesse, wie sie häufig bei additiven Fertigungsverfahren eingesetzt werden, einem kontinuierlichen Ablauf. Eine kurzfristige Steuerung der ausgetragenen Volumina ist aufgrund der vorliegenden Charakteristik nicht möglich und wurde in den bisherigen Anwendungen nicht benötigt bzw. technisch nicht weiter verfolgt. Im Bereich der zunehmend zur Anwendung kommenden generativen Fertigung birgt der Einsatz extrusionsbasierter Verfahren aufgrund der hohen erzielbaren Austragsleistungen ein hohes Entwicklungspotential. Die oben genannte Prozesscharakteristik steht dem insofern gegenüber, dass eine Regelung des Werkstoffaustrages nicht möglich ist. Dieser Umstand führt von unzureichender Bauteilgenauigkeit über überschüssig aufgetragenen Werkstoff bis hin zu Schädigungen der Bauteilstruktur. Die Einsatzfähigkeit des extrusionsbasierten 3D-Druckes wird dadurch in wesentlichem Maße eingeschränkt.

Die Charakteristik extrusionsbasierter Prozesse stellt für die Anwendung im Bereich der generativen Fertigung eine hohe technische Hürde bei der Herstellung von qualitativ hochwertigen Bauteilen mit komplexen inneren Strukturen dar.

Das konventionelle Extrudieren ist als kontinuierlicher Prozess angelegt und auf ein kurzfristiges Pausieren bzw. Regulieren des Volumenaustrages nicht angewiesen/ ausgelegt. Eine entsprechende Funktion ist bei derzeit erhältlichen Anlagen entsprechend nicht vorgesehen.

Im Bereich der additiven Fertigung existiert für die bestehende Problematik keine Lösung. Der Großteil der Anwender von extrusionsbasierten Systemen unterbricht bzw. reguliert den Werkstoffvolumenstrom etwa dadurch, dass die Drehung der Extrusionsschnecke unterbrochen wird und nimmt die entstehenden Überfüllungen/ -extrusionen, Nachlaufen, Fehlstellen, Inkonsistenzen der Strangbreite oder Maßabweichungen in Kauf. Entstehende Überfüllungen und zu große Wandstärken werden ggf. nachgearbeitet. Optional kann auch ein zusätzliches Aggregat, wie z.B. eine Extrudatpumpe dem Extruder nachgeschaltet werden. Diese nimmt wie ein Reservoir das Extrudat, beispielsweise eine Schmelze aus dem Extruder auf und gibt einen geregelten Volumenstrom der Schmelze aus.

So ist aus DE 38 15 897 C1 eine Schneckenmaschine mit Anfahrventil und Drossel bekannt.

CN 101 235 914 A betrifft Möglichkeiten für eine Dosierung.

Ein Dreiwegehahn mit einem kegelstumpfförmigen oder zylindrischen Hahnküken geht aus DE 87 12 896 U1 hervor.

Ein Verfahren zur Rückgewinnung eines Rohstoffes in einem Extrusionsprozess und ein Anfahrventil dazu sind in DE 102 04 244 C1 offenbart.

Aufgabe der Erfindung ist es daher, Möglichkeiten zur Beeinflussung des aus einer Austrittsdüse geförderten Volumenstroms eines Extrudats anzugeben.

Erfindungsgemäß wird diese Aufgabe mit einer Einrichtung, die die Merkmale des Anspruchs 1 aufweist. Vorteilhafte Ausgestaltungen der Erfindung können mit in untergeordneten Ansprüchen bezeichneten Merkmalen realisiert werden.

Bei der erfindungsgemäßen Regel- und Verschlusseinrichtung für extrudierten plastisch verformbaren Werkstoff wird dieser von einer Extrusionseinheit zu einer Austrittsdüse gefördert. Dabei ist ein Flansch an einer Seite mit einer Austrittsöffung der Extrusionseinheit und an der gegenüberliegenden Seite mit der Austrittsdüse verbunden.

Durch den Flansch ist ein Kanal geführt, durch den extrudierter plastisch verformbarer Werkstoff von der Extrusionseinheit zur Austrittsdüse förderbar ist. Außerdem sind ein erster Kolben und ein zweiter Kolben von zwei gegenüberliegenden Seiten in den Kanal geführt und dabei ist mindestens einer der Kolben senkrecht zur mittleren Längsachse des Kanals translatorisch bewegbar und/oder um eine senkrecht zur mittleren Längsachse drehbar gelagert und geführt.

In einer erfindungsgemäßen Alternative mindestens einem der Kolben ist eine an der äußeren Mantelfläche ausgebildete Öffnung, die in einen durch diesen Kolben geführten Kanal mündet, der wiederum in eine Bypassdüse mündet, ausgebildet.

Bei einer weiteren Alternative ist an der äußeren Mantelfläche des mindestens einen Kolbens eine Nut. Bevorzugt ist deren freier Querschnitt sich über ihre Länge stufenweise oder kontinuierlich verändernd ausgebildet.

Bei einer translatorischen und/oder rotatorischen Bewegung des mindestens einen Kolbens ist der freie Querschnitt, durch den extrudierter plastisch verformbarer Werkstoff in Richtung Austrittsdüse gefördert wird, veränderbar.

Alternativ dazu kann der mindestens eine Kolben so drehbar sein, dass eine Regelung des Volumenstroms des durch den Kanal geförderten extrudierbaren plastisch verformbaren Werkstoffs durch die Nut infolge der jeweils erreichten Winkelstellung des mindestens einen Kolbens erreichbar ist. Der Kolben in dem eine Nut ausgebildet ist, kann auch so gedreht werden, dass die Nut so positioniert ist, dass kein extrudierter plastisch verformbarer Werkstoff durch den Kanal zur Austrittsdüse gefördert werden kann.

Es besteht auch die Möglichkeit, dass mindestens ein Kolben translatorisch hin und her bewegt werden kann, wodurch sich zwischen den Stirnflächen der Kolben ein Spalt, mit je nach zurück gelegtem Weg bei der translatorischen Bewegung veränderbarem Spaltmaß, erhalten lässt, durch den extrudierter plastisch verformbarer Werkstoff aus dem Kanal zur Austrittsdüse mit einem entsprechend beeinflussten Volumenstrom gefördert werden kann. Bei einer Bewegung, bei der sich beide Stirnflächen der Kolben unmittelbar berühren, kann ein Verschluss und eine Förderung durch die Öffnung, den Bypasskanal und die Bypassdüse erreicht werden.

Bei einem vollständigen Verschluss des Kanals, durch den extrudierter plastisch verformbarer Werkstoff in Richtung Austrittsdüse gefördert wird, ist die an der äußeren Mantelfläche des mindestens einen Kolbens ausgebildete Öffnung so positionierbar, dass extrudierter plastisch verformbarer Werkstoff in den durch den mindestens einen Kolben geführten Kanal zur Bypassdüse förderbar ist. Dabei kann dieser Kanal den nicht zur Austrittsdüse der Einrichtung geförderten extrudierten plastisch verformbaren Werkstoff entweder im Kreislauf rückführen oder einem Auffangbehältnis oder einer unschädlichen Enstorgung zuführen.

Die Positionierung der Öffnung, die in den Kanal zur Bypassdüse mündet, kann durch eine translatorische oder eine Drehung des mindestens einen Kolbens positioniert werden.

Die Nut sollte über einen Winkelbereich größer 180 ° der Mantelfläche des mindestens einen Kolbens geführt sein. Bevorzugt kann sie neben der Öffnung, die im mindestens einen Kolben ausgebildet ist, angeordnet sein.

Die Nut kann auch über einen Winkelbereich kleiner 270° der Mantelfläche des mindestens einen Kolbens geführt sein, was sich insbesondere vorteilhaft auswirkt, wenn die Regelung des Volumenstroms durch definierte Rotation des mindestens einen Kolbens und einen sicheren Stopp der Förderung des extrudierten plastisch verformbaren Werkstoffs zur Austrittsdüse erfolgen soll.

Es können auch Nuten an den Oberflächen beider Kolben ausgebildet sein, die bevorzugt unterschiedlich dimensioniert und/oder in unterschiedlichen Winkelstellungen angeordnet sind.

Bei einer solchen Regelung kann der mindestens eine Kolben in eine Winkelstellung so gedreht werden, dass ein entsprechender Volumenstrom durch die Nut und zwischen der Zylinderinnenwand des Flansches, in der der mindestens eine Kolben geführt ist, gefördert werden kann. Der freie Querschnitt der Nut sollte sich in Richtung der Austrittsdüse der Einrichtung vergrößern, so dass es zu keiner Stauwirkung kommen kann.

Bei einem Förderstopp und Verschluss des Kanals, durch den extrudierter plastisch verformbarer Werkstoff zur Austrittsdüse gefördert wird, sollten sich die aufeinander zu weisend angeordneten Stirnflächen der beiden Kolben bei einem vollständigen Verschluss des Kanals, durch den extrudierter plastisch verformbarer Werkstoff, diesen Kanal abdichtend berühren. Dies kann bevorzugt durch eine translatorische Bewegung mindestens einer der beiden Kolben erreicht werden.

Die Einrichtung kann so ein geeignetes Ventil bilden, mit der der Volumenstrom regelbar ist oder temporär gestoppt werden kann. Dazu sollte ein Antrieb für eine definierte Bewegung des mindestens einen Kolbens vorhanden sein. Ein Antrieb kann mit einer elektronischen Steuer- oder Regeleinheit verbunden sein, die auch für die additive Herstellung von Bauteilen genutzt werden kann.

Ist zusätzlich mindestens ein Sensor bei der additiven Fertigung eingesetzt, können dessen Messsignale auch für eine Regelung des geförderten Volumenstroms oder einen Stopp der Förderung genutzt werden. Der mindestens eine Kolben kann dann in Abhängigkeit der momentan erfassten Messsignale des/der Sensors/Sensoren entsprechend bewegt und die Nut oder die Öffnung oder das Spaltmaß, das zwischen den zwei Stirnflächen, die aufeinander zu gewandt an den Kolben vorhanden sind, entsprechend eingestellt werden. Als extrudierbaren plastisch verformbaren Werkstoff kann man Thermoplaste, entsprechend viskose Suspensionen oder Pasten einsetzen. Bei thermoplastischen Werkstoffen oder Thermoplaste enthaltenden Extrudaten kann man einen zusätzlichen Plastifizierer einsetzen, mit dem eine für die Verarbeitung geeignete Temperatur des Werkstoffs, bei der eine plastische Verformung möglich ist, eingehalten werden kann. Geeignete Suspensionen oder Pasten sind aus dem Stand der Technik bekannt.

Gegenstand der Erfindung ist daher eine Regeleinheit, die eine Aufteilung des Gesamtvolumenstromes auf eine Austrittsdüse für eine additive Fertigung und/ oder eine Bypassdüse realisieren kann und somit einen diskontinuierlichen Austrag aus der Austrittsdüse bei Einsatz eines kontinuierlichen Extrusionsprozesses erreicht werden kann.

So sind
- ein Starten und Stoppen des Werkstoffaustrages durch die Austrittsdüse
- eine vollumfängliche Regulierung des ausgetragenen Volumenstromes
- eine Ausregelung von Druckschwankungen - ein

Einstellen eines gewünschten Druckniveaus innerhalb der Extrusionseinheit möglich.

Mit der Erfindung können die folgenden Vorteile erreicht werden:
- Unterbrechung eines kontinuierlichen Extrusionsprozesse mit kurzen Schaltzeiten
- Realisierung einer Start-Stopp-Funktion
- Vermeidung des Verschleppens von Werkstoff auf/ über dem zu fertigenden Bauteil
- Durchgängig homogen aufgebaute Strukturen (z.B. Strangbreitenkonstanz)
- Vermeidung von Überfüllungen in Randbereichen, engen Radien oder an geometrisch bedingten Umkehrpunkten

Außerdem kann die Qualität der Absetz-/Umsetzpunkte der Austrittsdüse in Verbindung mit Strangbreiten, z.B. größer als 1 mm, verbessert werden; es können Wände mit einer Wandstärke von 1 mm in einer einzigen Überfahrt hergestellt werden; die Herstellungsdauer und -kosten können reduziert werden; die Festigkeit des Bauteils orthogonal zur Strangrichtung kann verbessert werden und der verwendete Werkstoff kann effektiver genutzt werden.

Das Anwendungsgebiet mit dem größten Potential stellt die generative Fertigung mittels extrusionsbasierter Verfahren, vor allem bei großvolumigen Bauteilstrukturen, dar. Des Weiteren ist eine Anwendung in weiteren Bereichen der Extrusionstechnik denkbar. Ein Einsatz ist auch beim Beton-3D-Druck im Baugewerbe und 3D-Druck von Lebensmitteln (Schokolade, Pasten oder pürierte Lebensmittel) möglich.

Nachfolgend soll die Erfindung beispielhaft näher erläutert werden.

Dabei zeigen:
Figur 1 ein Beispiel einer erfindungsgemäßen Einrichtung in einer Schnittdarstellung, bei der eine Förderung von extrudiertem plastisch verformbarem Werkstoff möglich ist und
Figur 2 das in Figur 1 gezeigte Beispiel, bei dem kein extrudierter plastisch verformbarer Werkstoff zur Austrittsdüse für eine additive Fertigung sondern in Form eines Bypasses abgeführt werden kann.

Die Figuren zeigen ein Ventilsegment der auch als Bypass- /Verstellkolbenflansch bezeichnet werden kann. Der Flansch 1 ist an der hier vertikal oberen Seite mit einer nicht gezeigten Extrusionseinheit, die mindestens eine in einem Extrusionsrohr angeordnete Extrusionsschnecke aufweist, verbunden. An der gegenüberliegenden Stirnseite des Flansches 1 ist eine ebenfalls nicht gezeigte Austrittsdüse vorhanden, durch mit der Extrusionseinheit geförderter extrudierter plastisch verformbarer Werkstoff 5 zur additiven Fertigung bereit gestellt werden kann. Durch den Flansch 1 ist ein Kanal 7 geführt.

Im Flansch 1 sind zwei innenliegend, von außen mit einem nicht gezeigten Antrieb verbundene verstellbare Kolben 2 und 3 angeordnet und darin in einem Zylinder geführt. Die Kolben 2 und 3 sind drehbar gelagert im Flansch 1 verbaut und können auch translatorisch senkrecht zur Längsachse des Kanals 7, durch die der extrudierte plastisch verformbare Werkstoff 5 zur Austrittsdüse gefördert werden kann, bewegt werden.

Der extrudierte plastisch verformbare Werkstoff wird von der Extrusionseinheit kommend in den Flansch 1 gefördert, trifft dort auf die äußeren Mantelflächen der Kolben 2 und 3. In Abhängigkeit der Stellung der Kolben 2 und 3 kann der Volumenstrom vollständig zur Austrittsdüse gefördert und für die additive Fertigung zur Verfügung gestellt werden.

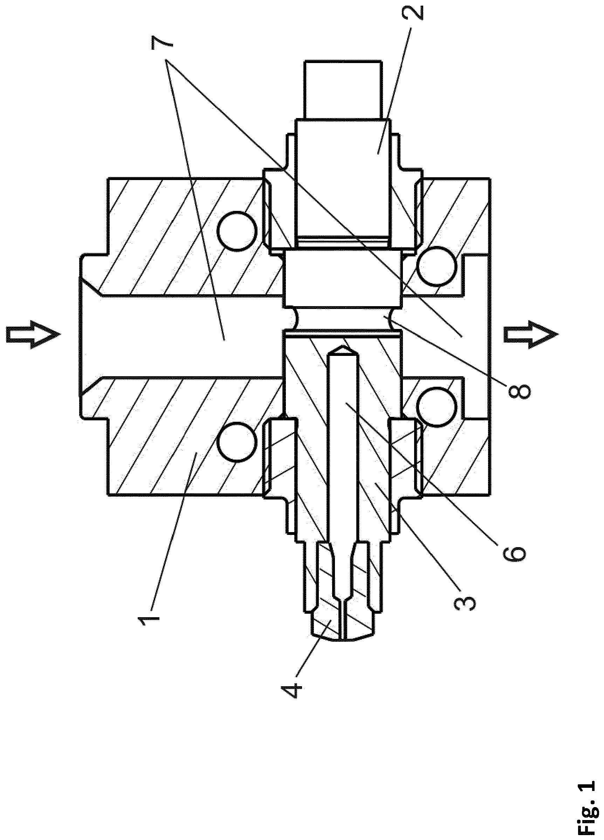

In Figur 1 ist nicht gezeigt, wie mindestens einer der Kolben 2 und 3 translatorisch so bewegt worden ist, dass ein bestimmtes Spaltmaß zwischen den aufeinander zu gewandten Stirnflächen der Kolben 2 und 3 erreicht worden ist. Damit kann Einfluss auf den jeweiligen Volumenstrom an extrudiertem plastisch verformbarem Werkstoff 5, der zur Austrittsdüse gelangt, genommen werden. Dies kann durch translatorische Bewegung mindestens eines der beiden Kolben 2 oder 3 senkrecht zur Längsachse des Kanals 7 erreicht werden.

In Figur 1 dargestellter Form kann auch eine Nut 8, die in der äußeren Mantelfläche mindestens eines der Kolben 2 und 3 ausgebildet ist, eingebracht sein. In diesem Fall sollte kein Spalt zwischen den beiden Kolben 2 und 3 vorhanden sein. Durch Drehung eines der Kolben 2 oder 3 kann die Nut 8 so positioniert werden, dass ein definierter Volumenstrom an extrudiertem plastisch verformbaren Werkstoff 5 zur Austrittsdüse gelangen kann. Dazu verändert sich der freie Querschnitt der Nut 8 über den Umfang, wie dies im allgemeinen Teil der Beschreibung erläutert worden ist.

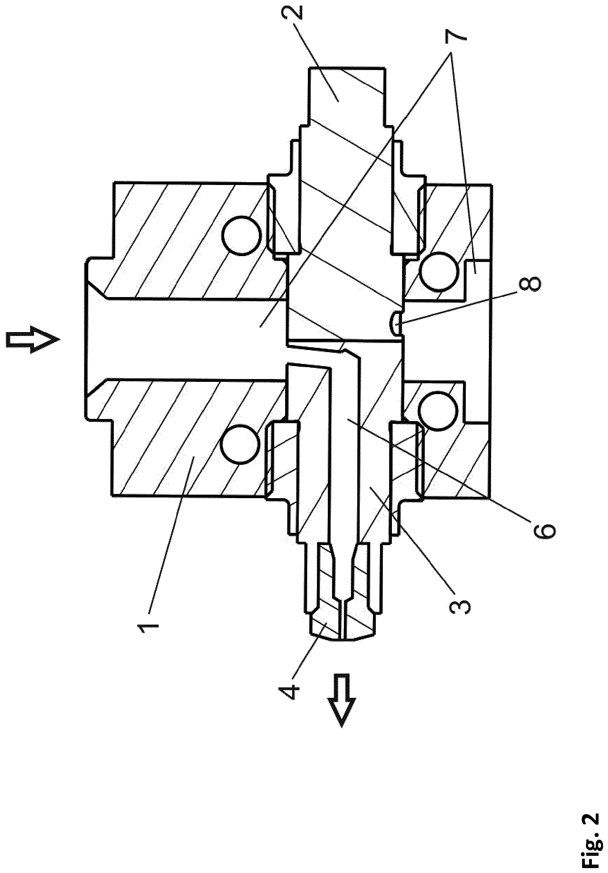

In der Figur 2 ist gezeigt, wie der Kolben 2 so positioniert worden ist, dass der Kanal 7 vollständig gesperrt ist, so dass kein extrudierter plastisch verformbarer Werkstoff 5 zur Austrittsdüse gelangen kann.

Im Kolben 3 ist dazu an der äußeren Mantelfläche an der Oberfläche eine Öffnung ausgebildet, die in den Kanal 6 mündet, der durch den Kolben 3 zur Bypassdüse 4 abgeleitet wird. Der Kolben 3 kann dazu translatorisch senkrecht zur Längsachse des Kanals 7 bewegt und/oder um diese Achse gedreht werden. Der so umgelenkte extrudierte plastisch verformbare Werkstoff 5 kann so vollständig oder teilweise wieder dem Prozess rückgeführt werden.

Erfolgt eine Regelung des Volumenstroms kann dabei die Größe des Spaltes zwischen den aufeinander zu gewandten Stirnseiten der Kolben 2 und 3 verändert und an den momentanen Bedarf angepasst werden. Dies kann durch translatorische Bewegung eines der Kolben senkrecht zur Längsachse des Kanals 7 erreicht werden. Wird extrudierter plastisch verformbarer Werkstoff durch die Nut 8 gefördert, kann durch die jeweilige Winkelstellung des Kolbens 2 oder 3 in dem die Nut 8 ausgebildet ist, Einfluss auf den jeweils förderbaren Volumenstrom genommen werden. Dabei kann der Volumenstrom an extrudiertem plastisch verformbaren Werkstoff so geregelt werden, dass ein bestimmter Teil an extrudiertem plastisch verformbaren Werkstoff 5 durch den Kanal 6 und ein anderer definierter Teil auch zur Austrittsdüse für die additive Fertigung durch den definiert eingestellten Spalt zwischen den Kolben gefördert werden kann.

Eine analoge Regelung kann auch bei einer Nut an der Oberfläche eines Kolbens 2 oder 3 erreicht werden, in dem die Nut und die Öffnung, die in den Kanal 6 mündet entsprechend positioniert werden.

Der Kanal 6 zur Bypassdüse 4 ist bei diesem Beispiel in der mittleren Längsachse des Kolbens 3 ausgebildet.

Sobald sich aus dem Bauprozess heraus bei der additiven Fertigung die Notwendigkeit ergibt, dass der Volumenstrom an extrudiertem plastisch verformbarem Werkstoff 5 gestoppt werden muss, kann der Kolben 2 in eine Stellung geschwenkt werden, in der kein Werkstofftransport an die Austrittsdüse möglich ist. Gleichzeitig kann der Kolben 3 so positioniert werden, dass der Werkstoff 5 vollständig über die Bypassdüse 4 abfließt, wie dies in Figur 2 gezeigt ist. Der austretende Werkstoff 5 wird dabei, wie oben beschrieben ab- bzw. rückgeführt. An der Austrittsdüse ist der Austrag entsprechend gestoppt.

## Patentansprüche

1. Regel- und Verschlusseinrichtung für extrudierten plastisch verformbaren Werkstoff (5), der von einer Extrusionseinheit zu einer Austrittsdüse gefördert wird, bei der ein Flansch (1) an einer Seite mit einer Austrittsöffung der Extrusionseinheit und an der gegenüberliegenden Seite mit der Austrittsdüse verbunden ist und
durch den Flansch (1) ein Kanal (7) geführt ist, durch den extrudierter plastisch verformbarer Werkstoff (5) von der Extrusionseinheit zur Austrittsdüse förderbar ist und
ein erster Kolben (2) und ein zweiter Kolben (3) von zwei genüberliegenden Seiten in den Kanal geführt sind; wobei
mindestens einer der Kolben (2, 3) senkrecht zur mittleren Längsachse des Kanals translatorisch bewegbar und/oder um eine senkrecht zur mittleren Längsachse drehbar gelagert und geführt ist und dabei
in mindestens einem der Kolben (2, 3) eine an der äußeren Mantelfläche ausgebildete Öffnung, die in einen durch diesen Kolben (2, 3) geführten Kanal (6) mündet, der wiederum in eine Bypassdüse (4) mündet, ausgebildet ist oder
an der äußeren Mantelfläche des mindestens einen Kolbens (2, 3) eine Nut (8) ausgebildet ist, durch die extrudierter plastisch verformbarer Werkstoff aus dem Kanal (7) in Richtung Austrittsdüse förderbar ist, wenn der Kolben(2, 3) in eine Winkelstellung gedreht worden ist, bei der die Nut (8) eine Verbindung zwischen Kanal 7 und Austrittsdüse bildet, durch die extrudierter plastisch verformbarer Werkstoff (5) förderbar ist,
und
bei einer translatorischen und/oder rotatorischen Bewegung des mindestens einen Kolbens (2, 3) der freie Querschnitt, durch den extrudierter plastisch verformbarer Werkstoff (5) in Richtung Austrittsdüse gefördert wird, veränderbar
oder der mindestens eine Kolben (2, 3) so drehbar ist, dass eine Regelung des Volumenstroms des durch den Kanal (7) geförderten extrudierbaren plastisch verformbaren Werkstoffs (5) durch die Nut (8) infolge der jeweils erreichten Winkelstellung des mindestens einen Kolbens (2, 3) erreichbar ist
**dadurch gekennzeichnet, dass**
bei einem vollständigen Verschluss des Kanals (7), durch den extrudierter plastisch verformbarer Werkstoff (5) in Richtung Austrittsdüse gefördert wird, die an der äußeren Mantelfläche des mindestens einen Kolbens (2, 3) ausgebildete Öffnung so positionierbar ist, dass extrudierter plastisch verformbarer Werkstoff (5) in den durch den mindestens einen Kolben (2, 3) geführten Kanal (6) zur Bypassdüse (4) förderbar ist.

2. Einrichtung nach Anspruch 1, **dadurch gekennzeichnet, dass** die Nut über einen Winkelbereich größer 180 ° der Mantelfläche des mindestens einen Kolbens (2, 3) geführt ist.

3. Einrichtung nach einem der vorhergehenden Ansprüche, **dadurch gekennzeichnet, dass** die Nut über einen Winkelbereich kleiner 270 ° der Mantelfläche des mindestens einen Kolbens (2, 3) geführt ist.

4. Einrichtung nach einem der vorhergehenden Ansprüche, **dadurch gekennzeichnet, dass** der freie Querschnitt der Nut (8) über ihre Länge stufenweise oder kontinuierlich verändert ist.

5. Einrichtung nach einem der vorhergehenden Ansprüche, **dadurch gekennzeichnet, dass** der freie Querschnitt der Nut (8) sich in Richtung der Austrittsdüse der Einrichtung vergrößernd ausgebildet ist.

6. Einrichtung nach einem der vorhergehenden Ansprüche, **dadurch gekennzeichnet, dass** Nuten an den Oberflächen beider Kolben (2 und 3) ausgebildet sind, die unterschiedlich dimensioniert und/oder in unterschiedlichen Winkelstellungen angeordnet sind.

7. Einrichtung nach einem der vorhergehenden Ansprüche, **dadurch gekennzeichnet, dass** sich die aufeinander zu weisend angeordneten Stirnflächen der beiden Kolben (2, 3) bei einem vollständigen Verschluss des Kanals, durch den extrudierter plastisch verformbarer Werkstoff (5) in Richtung Austrittsdüse gefördert wird, diesen Kanal abdichtend berühren.

## Claims

1. A control and closure device for extruded plastically deformable material (5) which is conveyed from an extrusion unit to an outlet nozzle, in which a flange (1) is connected on one side to an outlet opening of the extrusion unit and on the opposite side to the outlet nozzle, and
a channel (7) is guided through the flange (1), through which extruded plastically deformable material (5) can be conveyed from the extrusion unit to the outlet nozzle, and
a first piston (2) and a second piston (3) are guided into the channel from two opposite sides; wherein
at least one of the pistons (2, 3) is translationally movable perpendicularly to the central longitudinal axis of the channel and/or is mounted and guided rotatably about an axis perpendicular to the central longitudinal axis, and in this case an opening is formed in at least one of the pistons (2, 3) on the outer lateral surface, which opening opens into a channel (6) guided through this piston (2, 3), which in turn opens into a bypass nozzle (4), or
a groove (8) is formed on the outer lateral surface of the at least one piston (2, 3), through which groove extruded plastically deformable material can be conveyed out of the channel (7) in the direction of the outlet nozzle when the piston (2, 3) has been rotated into an angular position in which the groove (8) forms a connection between the channel (7) and the outlet nozzle, through which groove extruded plastically deformable material (5) can be conveyed,
and
during a translatory and/or rotatory movement of the at least one piston (2, 3), the free cross-section through which extruded plastically deformable material (5) is conveyed in the direction of the outlet nozzle can be varied
or the at least one piston (2, 3) is rotatable in such a way that a regulation of the volume flow of the extrudable plastically deformable material (5) conveyed through the channel (7) through the groove (8) is achievable as a result of the angular position of the at least one piston (2, 3) reached in each case,
**characterized in that**
when the channel (7) through which extruded plastically deformable material (5) is conveyed in the direction of the outlet nozzle is completely closed, the opening formed on the outer lateral surface of the at least one piston (2, 3) can be positioned in such a way that extruded plastically deformable material (5) can be conveyed in the channel (6) guided through the at least one piston (2, 3) to the bypass nozzle (4).

2. The device according to claim 1, **characterized in that** the groove is guided over an angular range greater than 180° of the lateral surface of the at least one piston (2, 3).

3. The device according to one of the preceding claims, **characterized in that** the groove is guided over an angular range smaller than 270° of the lateral surface of the at least one piston (2, 3).

4. The device according to one of the preceding claims, **characterized in that** the free cross-section of the groove (8) is varied stepwise or continuously over its length.

5. The device according to one of the preceding claims, **characterized in that** the free cross-section of the groove (8) is designed to increase in size in the direction of the outlet nozzle of the device.

6. The device according to one of the preceding claims, **characterized in that** grooves are formed on the surfaces of both pistons (2 and 3), which are differently dimensioned and/or arranged in different angular positions.

7. The device according to one of the preceding claims, **characterized in that** the end faces of the two pistons (2, 3), which are arranged facing one another, make sealing contact with the channel through which extruded plastically deformable material (5) is conveyed in the direction of the outlet nozzle when the channel is completely closed.

## Revendications

1. Dispositif de régulation et de fermeture pour un matériau extrudé plastiquement déformable (5), qui est transporté à partir d'une unité d'extrusion vers une buse de sortie, pour lequel une bride (1) est reliée d'un côté à une ouverture de sortie de l'unité d'extrusion et du côté opposé à la buse de sortie et
un canal (7), à travers lequel le matériau extrudé plastiquement déformable (5) peut être transporté à partir de l'unité d'extrusion vers la buse de sortie, est guidé à travers la bride (1) et
un premier piston (2) et un second piston (3) sont guidés dans le canal à partir de deux côtés opposés ; dans lequel
au moins l'un des pistons (2, 3) est monté et guidé de manière à pouvoir se déplacer en translation perpendiculairement à l'axe longitudinal médian du canal et/ou à pouvoir tourner autour d'un axe longitudinal médian perpendiculairement, et ce faisant une ouverture réalisée sur la surface d'enveloppe extérieure, qui débouche dans un canal (6) guidé par ce piston (2, 3), qui débouche à son tour dans une buse de dérivation (4), est réalisée dans au moins l'un des pistons (2, 3), ou
une rainure (8) est réalisée sur la surface d'enveloppe extérieure du au moins un piston (2, 3), à travers laquelle un matériau extrudé plastiquement déformable peut être transporté hors du canal (7) en direction de la buse de sortie, lorsque le piston (2, 3) a été tourné dans une position angulaire dans laquelle la rainure (8) forme une liaison entre le canal 7 et la buse de sortie, à travers laquelle un matériau extrudé plastiquement déformable (5) peut être transporté,
et
lors d'un mouvement de translation et/ou de rotation du au moins un piston (2, 3), la section transversale libre, à travers laquelle le matériau extrudé plastiquement déformable (5) est transporté en direction de la buse de sortie, peut être modifiée
ou le au moins un piston (2, 3) peut être tourné de telle sorte qu'une régulation du débit volumique du matériau extrudable plastiquement déformable (5) transporté à travers le canal (7) à travers la rainure (8) peut être obtenue en raison de la position angulaire respectivement atteinte par au moins un piston (2, 3)
**caractérisé en ce que**
lors d'une fermeture complète du canal (7), à travers lequel un matériau extrudé plastiquement déformable (5) est transporté en direction de la buse de sortie, l'ouverture réalisée sur la surface d'enveloppe extérieure du au moins un piston (2, 3) peut être positionnée de telle sorte que le matériau extrudé plastiquement déformable (5) peut être transporté dans le canal (6) guidé par le au moins un piston (2, 3) vers la buse de dérivation (4).

2. Dispositif selon la revendication 1, **caractérisé en ce que** la rainure est guidée sur une zone angulaire supérieure à 180° de la surface d'enveloppe du au moins un piston (2, 3).

3. Dispositif selon l'une quelconque des revendications précédentes, **caractérisé en ce que** la rainure est guidée sur une plage angulaire inférieure à 270° de la surface d'enveloppe du au moins un piston (2, 3).

4. Dispositif selon l'une quelconque des revendications précédentes, **caractérisé en ce que** la section transversale libre de la rainure (8) est modifiée par étapes ou de manière continue sur sa longueur.

5. Dispositif selon l'une quelconque des revendications précédentes, **caractérisé en ce que** la section transversale libre de la rainure (8) est réalisée de manière à s'agrandir en direction de la buse de sortie du dispositif.

6. Dispositif selon l'une quelconque des revendications précédentes, **caractérisé en ce que** des rainures sont réalisées sur les surfaces des deux pistons (2 et 3), qui sont de dimensions différentes et/ou sont disposées dans des positions angulaires différentes.

7. Dispositif selon l'une quelconque des revendications précédentes, **caractérisé en ce que** les faces frontales des deux pistons (2, 3), disposées en regard l'une de l'autre, sont en contact étanche avec ce canal lors d'une fermeture complète du canal à travers lequel un matériau extrudé plastiquement déformable (5) est transporté en direction de la buse de sortie.
